# EUROPEAN PATENT SPECIFICATION

(11) **EP 2 657 435 B1**
(45) Date of publication and mention of the grant of the patent: **14.09.2016**
(21) Application number: 13165486.5
(22) Date of filing: 26.04.2013
(51) Int. Cl.: E04H 17/16, F16B 9/02

(54) **Device for fastening plugging panels in a boundary wall**
Vorrichtung zur Befestigung von Abschlusspaneelen an einer Eindringschutzbarriere
Dispositif de fixage des panneaux de fermeture pour des treillis de clôture

(30) Priority: 27.04.2012 IT BO20120234
(43) Date of publication of application: 30.10.2013
(73) Proprietor: Della Casa, Maurizio, 41030 Bastiglia (MO) (IT)
(72) Inventor: Della Casa, Maurizio, 41030 Bastiglia (MO) (IT)
(74) Representative: Ruzzu, Giammario

(56) References cited:
- EP-A1- 2 243 903
- EP-A1- 2 362 038
- WO-A1-85/01979
- GB-A- 2 187 771

## Description

The present invention relates to the technical field concerning delimiting barriers (boundary walls), placed to fence working areas of sites, industrial facilities and machineries, automated robots, storage areas and generally any place, where it is necessary to separate an area from the surrounding areas, so as to protect workers, users, unauthorised persons or passers-by.

The above mentioned barriers are usually formed by a plurality of uprights, which have a base or are secured to the ground, and which are arranged suitably spaced apart, and a corresponding series of plugging panels, aimed at closing the gaps between the adjacent uprights.

According to a widespread solution, the panels are made of a metallic net structure, which has appropriate strength without being excessively heavy, and at the same time, it allows a visual control of what is going on inside the fenced area.

The net structure of the panels is preferred, where possible, also for aesthetic reasons, since it is visually less "overwhelming" with respect to a blind panel. In many applications of the above mentioned delimiting barriers, it is necessary that the latter satisfy precise safety regulations.

In the European Union, there have been introduced regulations (L. 157/43 Official Journal (OJ) of the European Union of 9/6/2006), which provide the following requirements for fixed protections:
- avoiding them or making them inefficient must not be easy;
- fixed protections must be fastened with systems that require the use of tools to open or disassemble them;
- the fastening systems must remain attached to the protections or to the machine when the protections are removed;
- if possible, the protections must not remain in their position in absence of their fastening means.

Italian Patent no. 1,334,471 protects a "Delimiting Barrier", in which the panels have a net structure, without a frame, and are crossed by horizontal ribs, having a trapezoid profile and made at different heights.

The panels are fastened to the uprights by means of shaped plates, which are associated to the two ends of each rib and are then secured to the corresponding uprights by means of relative bolts, screwed into corresponding threaded holes made on the uprights; as a consequence of tightening the plates to the uprights, respective portions of the vertical wires of the net situated along the panel sides are locked, so that the panel cannot slide in any way.

In order to facilitate the assembly, each plate, according to the invention, has temporary coupling elements, which include holding teeth allowing the plate to remain hung to the panel, in determined conditions, during the transitory step between the panel positioning and the beginning of screwing the relative bolt.

The delimiting barriers obtained according to the above mentioned patent meet only partially the above specified requirements.

The main drawback of this solution derives from the shape of said temporary coupling elements, which allow the plate to be kept fastened to the panel in a very unstable way and only if the panel is kept perfectly vertical, moved slowly, in absence of shakes and accidental hits; therefore, in practice, said temporary coupling elements are functional, with the due care, only during the assembly.

The EP 2 243 903 protects a "Fastening system for defining a delimiting barrier" formed by shaped plates aimed at fixing plugging panels having net structure to respective uprights, in a way functionally similar to what is provided for the shaped plates described in the above mentioned Italian Patent.

The device of the EP document is made in accordance with the preamble of claim 1.

The main characterizing aspect of the plates obtained in accordance with the teachings of said EP document lies in the joining means formed by two hooks, integral and coplanar with the plate, turned one toward the other and aimed at engaging the horizontal wires of the panel net structure. In this way, the plate is kept fixed to the panel in a more stable way in all the situations, in which the panel is detached from the uprights.

However, the risk of unintentional detachment is not completely eliminated in case of very strong shakes of the panel. This is due to the necessity to keep a distance between the two hooks slightly longer than the existing distance from outer side to outer side of two horizontal wires of the net structure with which the plate must be engaged, so that, obviously, the opposite operation is not prevented.

Moreover, each plate associated to the panel can "slide" very easily in the direction in which the respective horizontal wires of the net structure extend, moving toward the centre of the panel, and thus slowing down the assembly speed and increasing the probability of an unintentional detachment.

The plate described in the above mentioned EP document includes also a washer of elastomeric material, aimed at preventing the bolt from removing, before it is screwed to the upright.

The solution is efficient in functional terms, but disadvantageous as far as the preparation time of a delimiting barrier is concerned; actually, in the preparatory step, a bolt must be inserted for each plate and then a resilient washer aimed at keeping the bolt must be put on.

Taking into consideration that normally each panel requires eight plates, it is understood how the operation of washer insertion, which is not very fast, must be repeated for tens, if not hundreds of times.

EP 2 362 038 to Betafence Holding NV discloses a holding element for attaching a fence panel to a fence post, comprising click-action means for click-fit the fence panel into the holding element. However, said click-action means only provides for a single coupling point, and cannot stabilize itself during the locking operations. Moreover, the holding element of EP 2 362 038 is designed to operate with a frontal engagement, and it is conceived to lock two consecutive panels to the same post.

### OBJECTS OF THE INVENTION

Therefore, it is an object of the present invention to propose a device for fastening plugging panels in a delimiting barrier, conceived so as to be coupled with the panels in an easy and quick way, and in a stable position, so as to simplify and speed up the preparation step of the barrier, thus overcoming the drawbacks reported in the known solutions mentioned in the introductory note.

Another object of the invention is to propose a device which fully meets the current Community regulations concerning fixed protections, and which consequently can obtain all the necessary certificates for the barriers assembled with it.

A still further object of the invention is to develop a device formed in such a way that it can be used also on the plugging panels identical to the previous ones, so that it is possible to adapt the existing delimiting barriers by substituting the old shaped plates with the device.

Yet a further object of the invention is to present a device designed in such a way as not to require right and left elements, in order to avoid errors during the assembling step, and at the same time, to contain the production costs. The above mentioned objects are wholly obtained by a device for fastening plugging panels in a delimiting barrier according to claim 1.

### BRIEF DESCRIPTION OF THE DRAWINGS

The characteristic features of the invention will become evident from the following description of a preferred embodiment of the device under discussion, in accordance with the contents of the claims and with the help of the enclosed drawings, in which:
- Fig. 1 shows a perspective view of the device from the side aimed at receiving in abutment the upright;
- Fig. 2 shows a perspective view of the device of Fig. 1, from the opposite side;
- Fig. 3 shows a perspective view of a complete panel with a series of the devices under discussion, detached from a respective pair of uprights;
- Fig. 4 shows a perspective view, enlarged with respect to Fig. 3, of a portion of the panel with a device associated therewith;
- Fig. 5 shows a perspective view from a different angle with respect to Fig. 3, of the same portion of the panel and associated device fastened to the corresponding upright;
- Fig. 6 shows a perspective view of a second embodiment of the fastening device.

### DETAILED DESCRIPTION OF THE INVENTION

With reference to the above mentioned figures, reference numeral 1 indicates a delimiting barrier as a whole, as mentioned in the introductory note, aimed at fencing working areas of sites, industrial facilities and machineries, automated robots, storage areas and generally any place, where it is necessary to separate an area from the surrounding areas, so as to protect workers, users, unauthorised persons or passers-by. The delimiting barrier 1 includes, in a way known in itself, a modular structure, which can be composed as required, including a plurality of uprights 2, for example of the type that can be fastened to the ground by means of expansion plugs. The uprights are spaced out at prefixed distances along the periphery of the area to be delimited, and a corresponding series of plugging panels 3 are fastened to the uprights 2 and aimed at closing the gaps between the adjacent uprights.

The uprights 2 are preferably made of a square cross-section metallic tube.

The panels 3 are made, at least along the respective sides 3A, 3B, of a generally metallic net structure, without any frame, defined by horizontal wires 30 and vertical wires 31, mutually arc-welded.

As a non limiting example, the panels 3 have horizontal ribs 13 with a trapezoid profile, made at different heights and extending from one side to the other; the depth of the ribs 13 is suitably smaller than the dimension of the side of the upright 2.

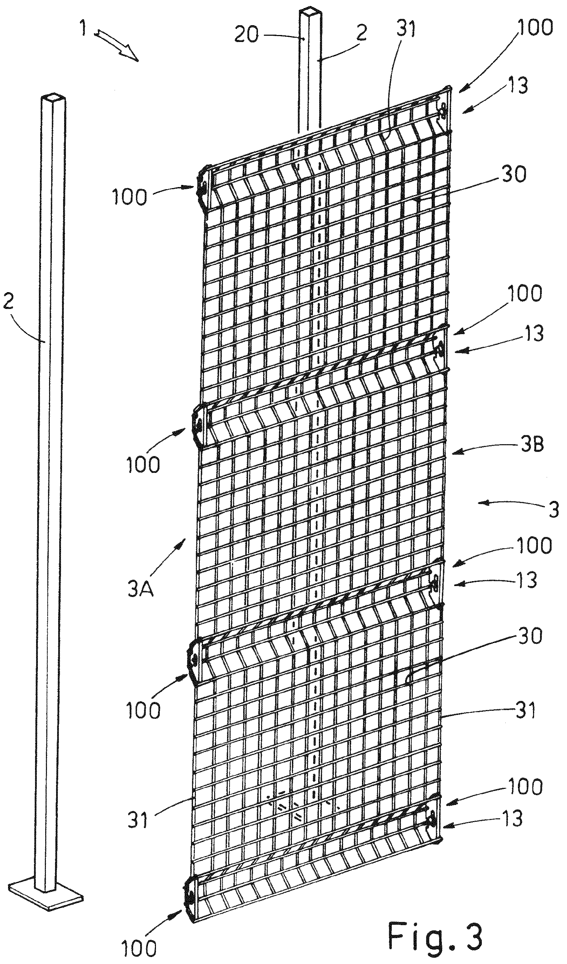

Fig. 3 shows the whole elements that define a delimiting barrier 1 in a minimum configuration, that is a pair of uprights 2 and a panel 3, which is provided with four horizontal ribs 13 in a known way.

In order to fasten the panel 3 to the uprights 2, the present invention provides a series of devices, for example two for each rib, for a total of eight (see Fig. 3); each of said devices has been indicated as a whole with the reference nu meral 100.

The device 100 includes a shaped plate 4, preferably made of synthetic material, injection moulded and thicker than the diameter of the wires that form the mentioned net structure of the panel 3 (for example, two or three times).

A slot 40 is made in the plate 4, with introduced therein a screw element, formed by a bolt 5, aimed at engaging with a corresponding threaded hole 20 made in the upright 2 (Fig. 3).

A small flange 41 is present in the slot 40, following its internal profile, preferably in a centred position with respect to its thickness, and aimed at reducing locally the width of the slot 40 to a value just smaller with respect to the outer diameter of the shank of the bolt 5.

Therefore, the bolt is introduced with a slight interference, which afterwards prevents the bolt 5 from being removed unintentionally in all the steps, during which it is not screwed into the threaded hole 20.

According to a preferred, but not exclusive embodiment, the small flange 41 is formed integral with the shaped plate 4 during the moulding; an appropriate choice of the composition of the material allows to obtain a high friction on the threads of the bolt 5 and a minimum of springback.

The plate 4, illustrated in the enclosed figures, has been studied specifically for the above mentioned panels 3, provided with the horizontal ribs 13 having a trapezoid profile, and aimed at being associated, without distinction, to both ends of each of the latter; consequently, the plate 4 has a trapezoid profile, similar to the one of the ribs 13.

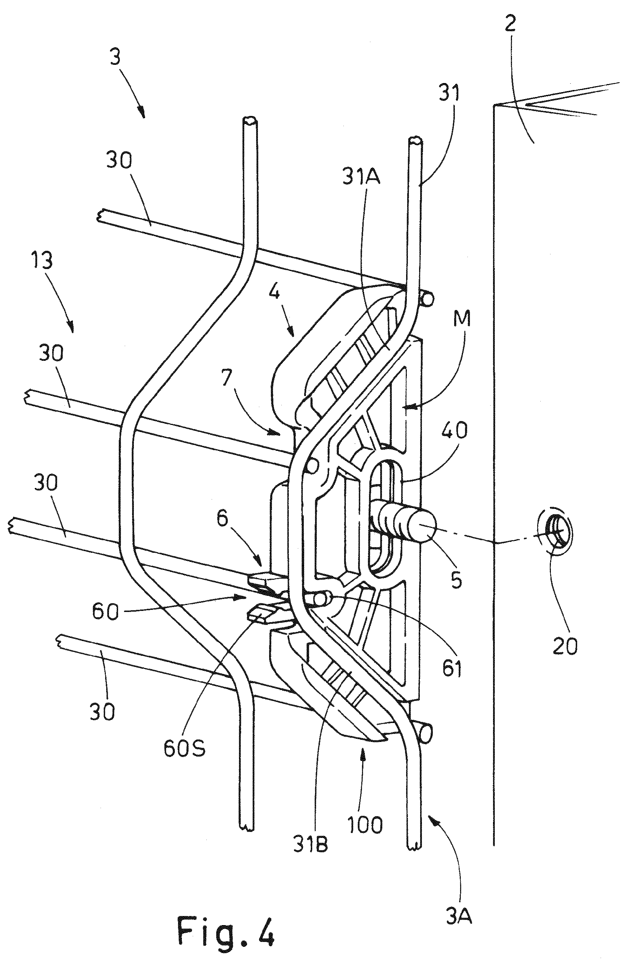

The plate 4 defines a face M, aimed at being turned towards the corresponding side of the upright 2, whose shape is suitably hollow, so as to allow it to house and receive in abutment a corresponding vertical wire 31, situated at the ends of said net structure. At least the portions 31 A, 31 B of the vertical wire define the slanting sides of the trapezoid profile of the rib 13 (see in particular Fig. 4).

Snap clamping means 6 are provided in the shaped plate 4, integral therewith and aimed at engaging with at least one wire of said net structure, so as to define a stable coupling between the shaped plate 4 and said panel 3.

In the illustrated example, said snap clamping means 6 are aimed at engaging with a horizontal wire 30 of the panel 3, situated in one of the cited horizontal ribs 13.

The snap clamping means 6 feature a mouth 60, whose opening is, at least in part, slightly smaller than the diameter of said horizontal wire 30, and by a following semicircular seat 61 aimed at receiving the wire 30 without interference.

The mouth 60 protrudes from the body of the plate 4, so as to allow its prongs to slightly spread apart elastically, which is necessary for the insertion of the horizontal wire 30.

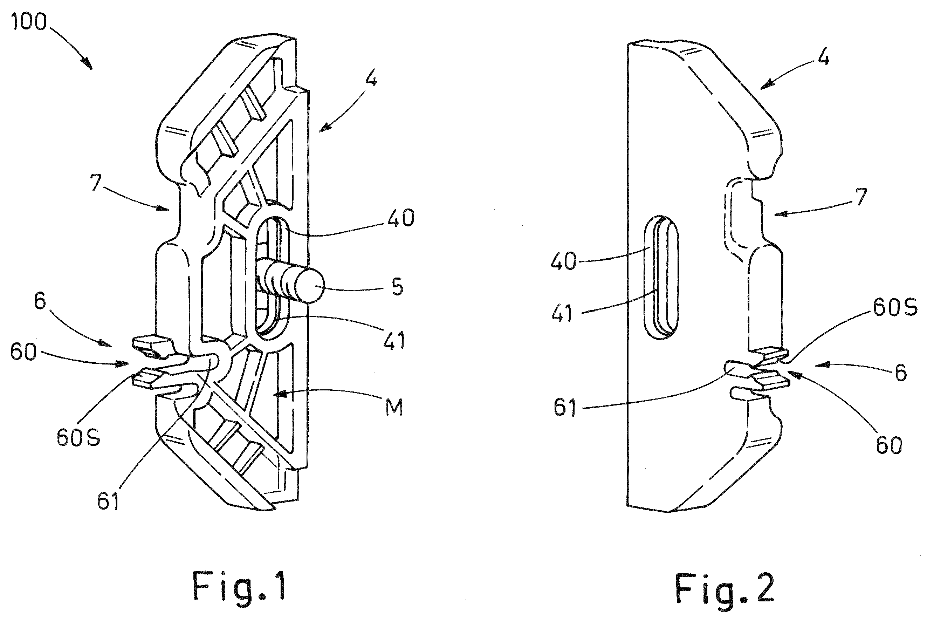

The width of the mouth 60 is smaller than the thickness of the plate 4; the narrowing is suitably situated in the direction of the face M, so as to allow the passage of said vertical wire 31 (Figs. 1 and 4).

A flare 60S, advantageously made in the initial part of the mouth 60, is aimed at facilitating the insertion of said horizontal wire 30 and the aforementioned spreading apart of the prongs of the mouth 60.

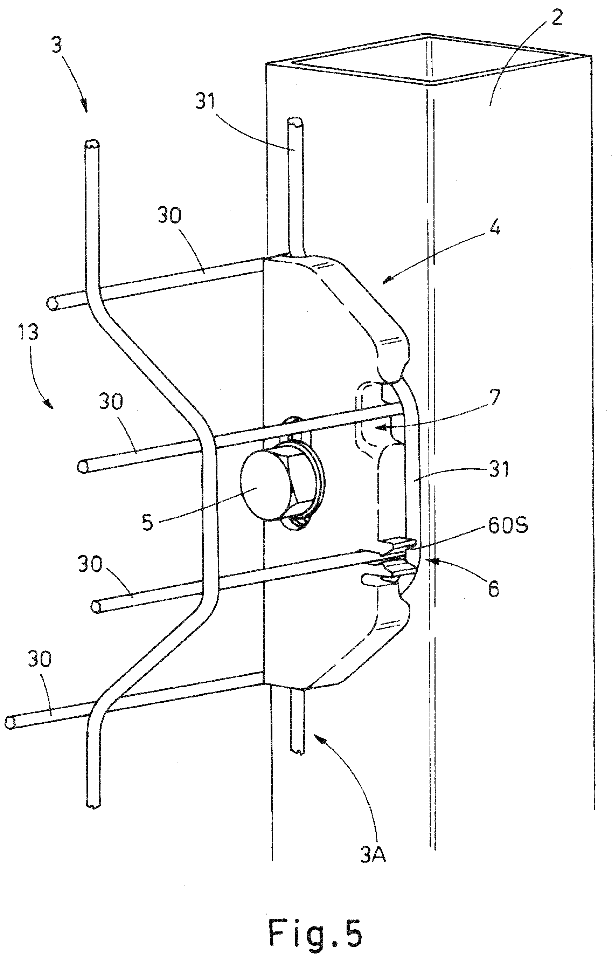

An indentation 7, made in the plate 4, is situated substantially symmetrical to said snap clamping means 6 and is aimed at allowing the free passage of another horizontal wire 30, situated in the same rib 13 and directly adjacent to and coplanar with the one engaged in the snap clamping means 6 (Fig. 4, 5).

Figures 4 and 5 illustrate the device 100 oriented in such a way as to be mounted at the side 3A of the panel 3 (the left one in Fig. 3), therefore the snap clamping means 6 are situated below the indentation 7.

In order to be mounted at the opposite side 3B (the right one in Fig. 3), the device 100 must be overturned, therefore the positions of said snap clamping means 6 and indentation 7 are inverted; this situation is intuitively comprehensible and thus it has not been shown in a detailed way in the figures.

The shaped plate 4 considered in the example, has such a vertical extension that it contacts, at the same time with and as a consequence of the engagement of said horizontal wire 30 with said snap clamping means 6, at least two other different horizontal wires 30 of the above mentioned net structure, so as to prevent the plate 4 from rotating (Fig. 4).

The installation of the delimiting barrier 1 includes in the beginning, as usual, placing the uprights 2 at the selected distance and in a suitable alignment.

Respective plates 4 are positioned at the two ends of each rib 13, the plates having their bolt 5 and being oriented so that the respective faces M are turned outwards.

Each plate 4 is inserted in the last mesh of the net close to the corresponding side 3A, 3B of the panel 3 and is fixed in a stable position by engaging the snap clamping means 6 with the corresponding horizontal wire 30; in this way, the face M rises above the portions 31 A, 31 B of the outermost vertical wire 31, that define the slanting sides of the trapezoid profile of said rib 13 (Fig. 4).

The panel 3, plates 4 and respective bolts 5 (Fig. 3) are fastened one to another and are stable, and thus, it is possible to handle the whole without too much care, in order to place it between the uprights 2: by screwing partially, by hand, the bolts 5 of the topmost couple of plates 4, a temporary support of the panel 3 is obtained immediately, thus allowing to release it, so as to continue, with all ease, to screw the remaining bolts 5 and then to tighten them.

Due to the shape of the plates 4, which fix the respective portions 31 A, 31 B of the vertical wires 31 to the panel 3 against the corresponding upright 2, the panel 3 is prevented from sliding in any direction (Fig. 5).

When a panel 3 must be removed from the respective uprights 2, the operation can be performed in an extremely easy way, with the respective plates 4 stably fastened and the corresponding bolts 5 kept in the slots 40, according to the previously cited regulations (see again Figs. 3 and 4).

The peculiar characteristics of the device under discussion appear extremely evident from what above, in particular with regard to the stable coupling obtained between the panel and plate with a simple and quick coupling operation of the snap clamping means.

The insertion of the bolt into the plate is quick as well. The bolt is automatically held by the friction of the small flange, without further elements, contrary to the known solution mentioned in the introductory note.

This allows to assemble delimiting barriers which are wholly complying with the Community regulations that concern fixed protections and, at the same time, to reduce the duration of the assembly step with respect to the known solutions.

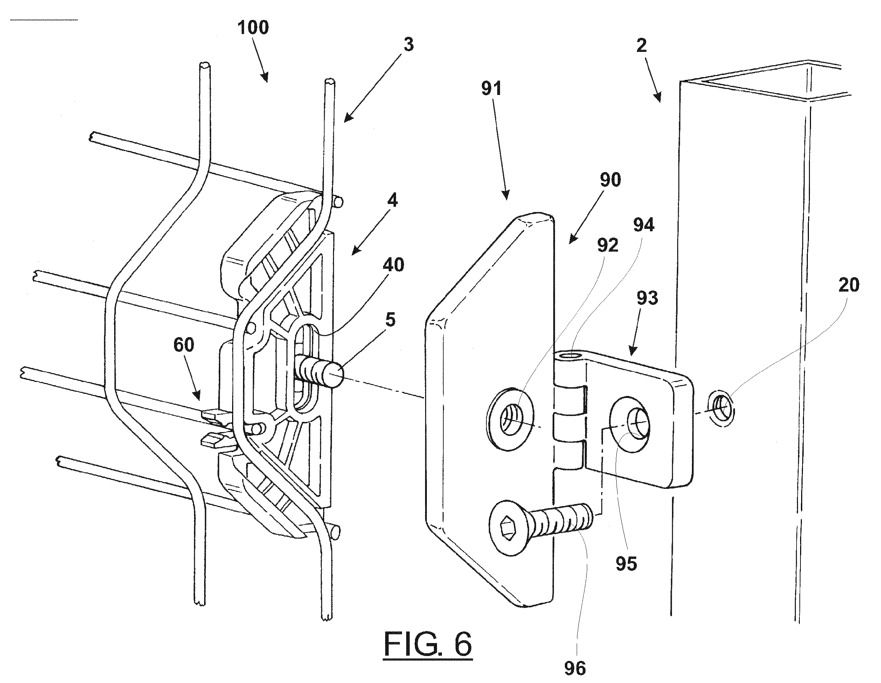

Fig. 6 shows a second embodiment of the fastening device 100 according to the invention. In said embodiment, the device 100 includes also hinge means 90, aimed at mounting a panel 3 on the respective upright 2, in such a way that it can be opened and closed as a shutter.

In particular, the hinge means 90 include, for each plate 4, a second plate 91, whose shape is substantially identical with the one of the already mentioned plate 4. The second plate 91 is provided, in its central part, with a threaded through hole 92, aimed at being engaged by the bolt 5 that comes out from the slot 40, so as to make a threaded coupling and thus fix the second plate 91 to the plate 4.

A holed block 93 is hinged to the second plate 91 by means of a suitable hinge 94. Also the holed block 93 is provided with a through hole 95, aligned with the threaded hole 92 of the second plate 91. A second bolt 96 is aimed at being inserted in the through hole 95, so as to engage the threaded hole 20 of the upright 2 in a threaded coupling, so as to fix the holed block 93 and the second plate 91 to the upright 2.

The operation of the device 100 of the above described second embodiment of the invention is wholly intuitive and allows the panel 3, which uses it, to be opened and closed as a shutter with respect to the upright 2.

An advantageous aspect of the preferred embodiment of the device, as illustrated and described, lies in the perfect compatibility with the pre-existing panels and uprights; besides the fact that no modifications of other components are required in order to assemble new barriers, this important feature allows also to bring the old ones up to date at relatively low costs.

A further advantageous aspect of the device derives from the fact that the same plate is used without distinction at the two sides of the panel, thus no right and left parts with the respective different moulds are required.

The positive characteristics of the described device allow the barrier to be assembled and disassembled, easily and without errors, by only one operator without particular care while handling the assembly panels-plates-bolts.

The device production costs can be contained within a range of values very similar to those of the previous solution.

It is understood that what above has been said as a not limiting example, therefore possible detail changes, that could become necessary due to the technical-functional reasons, are hitherto considered within the protective scope defined by the following claims.

## Claims

1. A fastening device (100) for fastening plugging panels (3) in a delimiting barrier (1), said delimiting barrier being of the type including at least two uprights (2), arranged at a predefined distance one from the other, with one of said plugging panels (3) being interposed therebetween and made integral therewith, being provided with horizontal ribs (13) having a trapezoid profile and made at different heights and extending from one side to the other, at least the relative sides (3A, 3B) of said panels (3) being formed by a net structure; said fastening device (100) includes: a shaped plate (4), having a trapezoid profile similar to the profile of said ribs (13) and being fit to engage one end of one of said ribs (13), for fastening the respective side (3A, 3B) of said panel (3) to one of said uprights (2), by means of at least one associated screw member (5), this latter being aimed at engaging with a corresponding threaded hole (20), made in said upright; **characterised by** snap hooking means (6), provided in said shaped plate (4) and aimed at engaging with at least one wire of said rib (13), near the end thereof, so as to define a stable coupling between the shaped plate (4) and said panel (3).

2. A device in accordance with claim 1, **characterised in that** said shaped plate (4) is aimed at being associated, without distinction, to either ends of each rib (13) and has its face (M), the one turned outwards to face the respective upright side (2), so shaped as to house and receive in abutment a corresponding vertical wire (31), situated at the ends of said net structure, at least in the portions (31A, 31B) of said wire that define the slanting sides of said trapezoid profile of the rib (13).

3. A device in accordance with claim 1 or 2, **characterized in that** said shaped plate (4) is made of synthetic material.

4. A device in accordance with claim 1, **characterized in that** said snap clamping means (6) feature a mouth (60) and a following semicircular seat (61) aimed at receiving the wire of said horizontal ribs (13).

5. A device in accordance with claim 3 or 4, **characterized in that** said snap clamping means (6) are made integral in a single body with said shaped plate (4).

6. A device in accordance with claim 4, **characterized in that** said mouth (60) protrudes from the body of said plate (4).

7. A device in accordance with claim 4 or 6, **characterized in that** a flare (60S), aimed at facilitating the insertion of said wire, is made at the initial part of said mouth (60).

8. A device in accordance with claim 1 or 3, **characterized in that** a slot (40), made in said shaped plate (4), is aimed at receiving said screw member (5) and has a small flange (41), which follows its inner profile and which is aimed at reducing locally the smaller dimension of the slot (40) so as to engage said screw member (5) with a slight interference, which prevents unintentional removal thereof.

9. A device in accordance with claim 8, **characterized in that** said small flange (41) is made integral with said shaped plate (4).

10. A device in accordance with claim 1 or 4, **characterized in that** said snap clamping means (6) are aimed at engaging with a horizontal wire (30) of said panel (3), situated in one of said horizontal ribs (13) having a trapezoid profile.

11. A device in accordance with claim 10, **characterized in that** an indentation (7), made in said plate (4), is situated substantially symmetrical to said snap clamping means (6) and is aimed at allowing the free passage of another horizontal wire (30), situated in the same rib (13) and directly adjacent to and coplanar with the one engaged in the snap clamping means (6).

12. A device in accordance with claim 10, **characterized in that** said shaped plate (4) has such a vertical extension that it contacts, at the same time with and as a consequence of the engagement of said horizontal wire (30) with said snap clamping means (6), at least two other different horizontal wires (30) of the above mentioned net structure, so as to prevent the plate (4) from rotating.

13. A device in accordance with any preceding claim, **characterized in that** it includes also hinge means (90), associated to said plate (4) and aimed at mounting a said panel (3) on a respective said upright (2) in opening way.

14. A device in accordance with claim 13, **characterized in that** said hinge means include, for each said plate (4), a second plate (91), fixed to said first plate (4) and hinged to a holed block (93) by means of a suitable hinge (94), said holed block (93) being fit to be fixed to said upright (2).

15. A delimiting barrier (1) comprising plugging panels (3) and a fastening device (100) for fastening said panels (3) to the barrier (1), said delimiting barrier (1) being of the type including at least two uprights (2), arranged at a predefined distance one from the other, with one of said plugging panels (3) being interposed therebetween and made integral therewith, being provided with horizontal ribs (13) having a trapezoid profile and made at different heights and extending from one side to the other, at least the relative sides (3A), (3B) of said panels (3) being formed by a net structure; said fastening device (100) includes: a shaped plate (4), having a trapezoid profile similar to the profile of said ribs (13) and being fit to engage one end of one of said ribs (13), for fastening the respective side (3A), (3B) of said panel (3) to one of said uprights (2), by means of at least one associated screw member (5), this latter being aimed at engaging with a corresponding threaded hole (20), made in said upright; **characterized by** snap hooking means (6), provided in said shaped plate (4) and aimed at engaging with at least one wire of said rib (13), near the end thereof, so as to define a stable coupling between the shaped plate (4) and said panel (3) and wherein said snap clamping means (6) feature a mouth (60), whose opening is, at least in part, slightly smaller than the diameter of the wire of said horizontal ribs (13), and a following semicircular seat (61) aimed at receiving the wire without interference.

## Patentansprüche

1. Befestigungsvorrichtung (100) zur Befestigung von Abschlusspaneelen (3) an einer Eindringschutzbarriere wobei die Begrenzungsbarriere mindestens zwei Ständern (2) umfasst, die in einem vorgegebenen Abstand voneinander angeordnet sind, und wobei einer der Abschlusspaneelen (3) dazwischen und einstückig mit ihnen angeordnet ist und mit horizonal Rippen (13) versehen ist, die eine Trapezprofil haben und in unterschiedlichen Höhen gefertigt sind und von einer Seite zur der anderen erstrecken, mit mindestens die relativen Seiten (3A, 3B) des Paneels (3) durch eine Netzstruktur gebildet; wobei die Befestigungsvorrichtung (100) das Folgendes umfasst: eine Formplatte (4), die eine Trapezprofil ähnlich dem Profil der Rippen (13) hat und zur Befestigung von der jeweiligen Seite (3A, 3B) des Paneels (3) an einem der Ständer (2), an einem Ende einer der genannten Rippen (13) mittels wenigstens einer zugehörigen Schraubenelements (5) eingreifen kann, wobei das Schraubenelement mit einem entsprechenden, im Ständer hergestellt Gewindebohrung (20) eingreifen muss; **dadurch gekennzeichnet ist, dass** Schnapphakenmitteln (6) in der Formplatte (4) um mit mindestens einem Draht der Rippe (13), am Ende davon, zu eingreifen vorgesehen sind, so dass eine stabile Kopplung zwischen der Formplatte (4) und dem Paneel (3) definiert wird.

2. Vorrichtung nach Anspruch 1, **dadurch gekennzeichnet daß** der Formplatte (4) zu beiden Enden jeder Rippe (13), ohne Unterschied, zu verbinden ist seine Fläche (M), die nach außen gedreht und die jeweiligen Seite des Standers (2) zugewandt ist, so geformt ist, dass die eine entsprechende vertikale Draht (31) beherbergt und in Widerlager empfängt, wobei der Draht sich an den Enden der Netzstruktur befindet, und mindestens in den Abschnitten (31A, 31 B) des Drahts, die die schrägen Seiten des Trapezprofils der Rippe (13) definieren. liegt.

3. Vorrichtung nach Anspruch 1 oder 2, **dadurch gekennzeichnet daß** die Formplatte (4) aus synthetischem Material hergestellt ist.

4. Vorrichtung nach Anspruch 1, **dadurch gekennzeichnet daß** die Schnapphakenmittel (6) eine Öffnung (60) und eine folgende halbrunden Sitz (61) umfassen, die zur Aufnahme des Drahtes der horizontalen Rippen (13) vorgesehen sind.

5. Vorrichtung nach Anspruch 3 oder 4, **dadurch gekennzeichnet daß** die Schnapphakenmittel (6) integral in einem einzigen Körper mit der Formplatte (4) gebildet sind.

6. Vorrichtung nach Anspruch 4, **dadurch gekennzeichnet daß** der Mund (60) aus dem Körper der Platte (4) ragt.

7. Vorrichtung nach Anspruch 4 oder 6, **dadurch gekennzeichnet daß** eine Fackel (60S) im Anfangsteil der Mund (60) zur Erleichterung der Einfügung des Drahtes vorgesehen ist.

8. Vorrichtung nach Anspruch 1 oder 3, **dadurch gekennzeichnet daß** ein Schlitz (40) in der Formplatte (4) zur Aufnahme des Schraubenelementes (5) gebildet ist und einen kleinen Flansch (41) aufweist, der das inneren Profil des Schlitzes folgt und die kleinere Abmessung des Schlitzes (40) lokal reduziert, um an das Schraubenelement (5) mit einer leichten Interferenz in Eingriff zu kommen und ein unbeabsichtigtes Entfernen des Schraubenelementes davon zu verhindern.

9. Vorrichtung nach Anspruch 8, **dadurch gekennzeichnet daß** der kleine Flansch (41) fest mit dem Formplatte (4) ausgebildet ist.

10. Vorrichtung nach Anspruch 1 oder 4, **dadurch gekennzeichnet daß** die Schnapphakenmittel (6) mit einer horizontalen Draht (30) des Paneels (3) in Eingriff zu stehen bestimmt sind, der sich in einer der horizontalen Rippen (13) befindet und ein Trapezprofil hat.

11. Vorrichtung nach Anspruch 10, **dadurch gekennzeichnet daß** die Platte (4) eine Vertiefung (7) aufweist, die im wesentlichen symmetrisch zu den Schnapphakenmittel (6) gelegen ist und den freien Durchgang eines anderen horizontalen Draht (30) ermöglicht, der sich in der gleichen Rippe (13) befindet und unmittelbar benachbart und koplanar mit dem Draht, der mit den Schnapphakenmitteln (6) in Eingriff stehet, ist.

12. Vorrichtung nach Anspruch 10, **dadurch gekennzeichnet daß** der Formplatte (4) eine solche vertikale Ausdehnung, daß sie gleichzeitig in Kontakt mit mindestens zwei anderen unterschiedlichen horizontalen Drähten (30) der Netzstruktur steht in Folge der Eingriff des horizontalen Dräht (30) mit der Schnapphakenmitteln (6), so dass das Rotation der Platte (4) verhindert ist.

13. Vorrichtung nach einem der vorhergehenden Ansprüche, **dadurch gekennzeichnet daß** die auch Scharniermittels (90) umfasst , die an der Platte (4) zugeordnet sind für die Montage die Platte (3) an einem entsprechenden Standern (2) in offentlicher weise.

14. Vorrichtung nach Anspruch 13, **dadurch gekennzeichnet daß** das Scharniermittel eine zweite Platte (91), für jede der Platte (4) umfassen, die an der ersten Platte (4) befestigt und an einem gelochten Block (93) mittels eines geeigneten Gelenk (94) angelenkt ist, wobei der gelochten Block (93) an den Ständer (2) festgelegt werden kann.

15. Eine Begrenzungsbarriere (1) die Abschlusspaneelen (3) und eine Befestigungsvorrichtung (100) zur Befestigung von die Abschlusspaneelen (3) an der Begrenzungsbarriere umfasst, wobei die Begrenzungsbarriere mindestens zwei Ständern (2) umfasst, die in einem vorgegebenen Abstand voneinander angeordnet sind, und wobei einer der Abschlusspaneelen (3) dazwischen und einstückig mit ihnen angeordnet ist und mit horizontal Rippen (13) versehen ist, die eine Trapezprofil haben und in unterschiedlichen Höhen gefertigt sind und von einer Seite zur der anderen erstrecken, mit mindestens die relativen Seiten (3A, 3B) des Paneels (3) durch eine Netsstruktur gebildet; wobei die Befestigungsvorrichtung (100) das Folgendes umfasst: eine Formplatte (4), die eine Trapezprofil ähnlich dem Profil der Rippen (13) hat und zur Befestigung von der jeweiligen Seite (3A, 3B) des Paneels (3) an einem der Ständer (2), an einem Ende einer der genannten Rippen (13) mittels wenigstens einer zugehörigen Schraubenelements (5) eingreifen kann, wobei das Schraubenelement mit einem entsprechenden, im Ständer hergestellt Gewindebohrung (20) eingreifen muss; **dadurch gekennzeichnet ist, dass** Schnapphakenmitteln (6) in der Formplatte (4) um mit mindestens einem Draht der Rippe (13), am Ende davon, zu eingreifen vorgesehen sind, so dass eine stabile Kopplung zwischen der Formplatte (4) und dem Paneel (3) definiert wird.

## Revendications

1. Dispositif de fixage (100) des panneaux de fermeture (3) pour des treillis de clôture (1), ladite treillis de clôture étant du type comprenant au moins deux montants (2), disposés à une distance prédéterminée l'un de l'autre, l'un desdits panneaux de fermeture (3) étant interposé entre celles-ci et étant en une seule pièce avec eux, le panneau étant muni de nervures horizonal (13) qui ont un profil trapézoïdal et sont réalisées à différentes hauteurs et prolongent d'un côté à l'autre, au moins les côtés relatifs (3A, 3B) dudit panneau (3) étant formé par une structure réticulaire; ledit dispositif de fixage (100) comprend; une plaque profilée (4), ayant un profil trapézoïdal similaire au profil des nervures (13) et qui pourrait-elle s'engager avec une extrémité de l'une desdites nervures (13) pour la fixation du côté respectif (3A, 3B) dudit panneau (3) à l'un des montants (2), au moyen d'au moins un élément de vis (5) associé, ce élément étant destiné à coopérer avec un trou fileté correspondant (20), qui est fait dans le montant; **caractérisé en ce que** des moyens d'accrochage à ressort (6) sont prévus dans la plaque en forme (4) pour venir en prise avec au moins un fil de la nervure (13), près de l'extrémité de celui-ci, de manière à définir un couplage stable entre la plaque profilée (4) et le panneau (3).

2. Dispositif selon la revendication 1, **caractérisé en ce que** ladite plaque profilée (4) peut être associé à l'une ou l'autre des deux extrémités de chaque nervure (13), sans distinction, et a sa face (M), celle qui est tournée vers l'extérieur pour faire face vers le côté de montant (2) respectif, conformé de manière à loger et recevoir en butée un fil vertical correspondant (31), situés aux extrémités de ladite structure réticulaire, au moins dans les portions (31 A, 31 B) dudit fil qui définissent les côtés obliques dudit profil trapézoïdal de la nervure (13).

3. Dispositif selon la revendication 1 ou 2, **caractérisé en ce que** ladite plaque profilée (4) est réalisé en matière synthétique.

4. Dispositif selon la revendication 1, **caractérisé en ce que** lesdits moyens d'accrochage à ressort (6) disposent d'une bouche (60) et un siège semi-circulaire suivante (61) destinés à recevoir le fil des nervures horizontales (13).

5. Dispositif selon la revendication 3 ou 4, **caractérisé en ce que** lesdites moyens d'accrochage à ressort (6) sont solidaires dans un seul corps avec la plaque profilée (4).

6. Dispositif selon la revendication 4, **caractérisé en ce que** ladite bouche (60) fait saillie à partir du corps de ladite plaque (4).

7. Dispositif selon la revendication 4 ou 6, **caractérisé en ce que** une fusée (60S) est faite à la première partie de ladite bouche (60) et destiné à faciliter l'insertion du fil.

8. Dispositif selon la revendication 1 ou 3, caractérisé en ce queune fente (40) est réalisée dans la plaque profilée (4) pour recevoir l'élément fileté (5) et a une petite bride (41), qui suit le profil intérieur de la fente et ayant pour but de réduire localement la plus petite dimension de la fente (40) de façon à engager l'élément de vis (5) avec une légère interférence, qui empêche le retrait accidentel de celui-ci.

9. Dispositif selon la revendication 8, **caractérisé en ce que** ladite petite bride (41) est rendue solidaire de la plaque profilée (4).

10. Dispositif selon la revendication 1 ou 4, **caractérisé en ce que** lesdites moyens d'accrochage à ressort (6) sont destinés à coopérer avec un fil horizontal (30) du panneau (3), situé dans l'une des nervures horizontales (13) ayant un profil trapézoïdal.

11. Dispositif selon la revendication 10, **caractérisé en ce que** une retrait (7) est réalisée dans la plaque (4) et est située sensiblement symétrique par rapport aux moyens d'accrochage à ressort (6) et permette le libre passage d'un autre fil horizontal (30), situé dans la même nervure (13) et directement adjacent et coplanaire avec celui engagé dans les moyens d'accrochage à ressort (6).

12. Dispositif selon la revendication 10, **caractérisé en ce que** la plaque profilée (4) présente une extension verticale telle qu'il entre en contact, dans le même temps et à la suite de l'engagement dudit fil horizontal (30) avec les moyens d'encliquetage de serrage (6), avec au moins deux autres fils horizontaux (30) différents de la structure reticulaire, de sorte que les fils empêchent la plaque (4) de tourner.

13. Dispositif selon la revendication 10, **caractérisé en ce que** il comprend également des moyens d'articulation (90), associés à ladite plaque (4) et destinées à monter un panneau (3) sur une respective dudites montants (2) de manière d'ouverture.

14. Dispositif selon la revendication 13, **caractérisé en ce que** lesdites moyens d'articulation comprennent, pour chaque plateau (4), une deuxieme plaque (91), qui est fixée à la première plaque (4) et articulée sur un bloc troué (93) au moyen d'une articulation (94) appropriée, ledit bloc troué (93) étant apte à être fixé audit montant (2).

15. Une treillis de clôture comprennant des panneaux de fermeture (3) et un dispositif de fixage (100) pour le fissage des des panneaux de fermeture (3) à la treillis de clôture (1), ladite treillis de clôture étant du type comprenant au moins deux montants (2), disposés à une distance prédéterminée l'un de l'autre, l'un desdits panneaux de fermeture (3) étant interposé entre celles-ci et étant en une seule pièce avec eux, le panneau étant muni de nervures horizontal (13) qui ont un profil trapézoïdal et sont réalisées à différentes hauteurs et prolongent d'un côté à l'autre, au moins les côtés relatifs (3A, 3B) dudit panneau (3) étant formé par une structure réticulaire; ledit dispositif de fixage (100) comprend; une plaque profilée (4), ayant un profil trapézoïdal similaire au profil des nervures (13) et qui pourrait-elle s'engager avec une extrémité de l'une desdites nervures (13) pour la fixation du côté respectif (3A, 3B) dudit panneau (3) à l'un des montants (2), au moyen d'au moins un élément de vis (5) associé, ce élément étant destiné à coopérer avec un trou fileté correspondant (20), qui est fait dans le montant; **caractérisé en ce que** des moyens d'accrochage à ressort (6) sont prévus dans la plaque en forme (4) pour venir en prise avec au moins un fil de la nervure (13), près de l'extrémité de celui-ci, de manière à définir un couplage stable entre la plaque profilée (4) et le panneau (3).
